# EUROPEAN PATENT APPLICATION

(11) **EP 4 383 132 A1**
(43) Date of publication of application: **12.06.2024**
(21) Application number: 23192365.7
(22) Date of filing: 21.08.2023
(51) Int. Cl.: G06N 3/045, G06N 3/0895, G06N 3/09

(54) **MATHEMATICAL MODEL LEARNING METHOD**

(30) Priority: 06.12.2022 US 202218075991
(71) Applicant: Rakuten Group, Inc., Setagaya-ku Tokyo 158-0094 (JP)
(72) Inventor: Chiu, Justin, Tokyo, 158-0094 (JP)
(74) Representative: Hoffmann Eitle

(57) **Abstract**

A method according to this disclosure is a method of learning a model used upon searching for a product corresponding to a predetermined search condition from among multiple products, including: a step of generating first vector representations based on product information of the multiple products and generating first data including one or more combinations of products highly similar to each other from among the multiple products based on similarity between the first vector representations, with using a first model 16; a step of generating second vector representations from product information of two products included in each of the combinations of products included in the first data and generating second data including combinations of products highly similar to each other based on the second vector representations with using a second model 18; and a step of executing learning of a third model 19 using the second data as training data.

## Description

### Background

### Field

This disclosure relates to a mathematical model learning method.

### Description of Related Art

In recent years, online e-commerce services have been provided. In a platform for carrying out e-commerce, an item (hereinafter, which may also be called a "product") put up for sale desired by a user may be searched for based on a search word entered by the user. Further, the same product may be searched for based on the item for sale selected by the user. Thus, in the e-commerce platform, matching whether or not two different items for sale in a product catalog indicate the same real product (hereinafter called "product matching") is performed. In recent years, a deep learning model based on natural language processing has been introduced in product matching.

### Summary

Non-Patent Document 1: Yuliang Li, Jinfeng Li, Yoshihiko Suhara, AnHai Doan, and Wang-Chiew Tan. 2020. Deep entity matching with pre-trained language models. arXiv preprint arXiv:2004.00584.
Non-Patent Document 2: Ralph Peeters, Christian Bizer, and Goran Glavas. 2020. Intermediate training of BERT for product matching. small, 745(722):2-112.
Non-Patent Document 3: Kashif Shah, Selcuk Kopru, and Jean-David Ruvini. 2018. Neural network-based extreme classification and similarity models for product matching. In Proceedings of the 2018 Conference of the North American Chapter of the Association for Computational Linguistics: Human Language Technologies, Volume 3 (Industry Papers), pages 8-15, New Orleans Louisiana. Association for Computational Linguistics.
Non-Patent Document 4: Janusz Tracz, Piotr two Wójcik, Kalina Jasinska Kobus, Riccardo Belluzzo, Robert Mroczkowski, and Ireneusz Gawlik. 2020. BERT-based similarity learning for product matching. In Proceedings of Workshop on Natural language Processing in E-Commerce, pages 66-75, Barcelona, Spain. Association for Computational Linguistics.
In Non-Patent Documents 1 to 4, use of a bi-encoder or a cross-encoder as a mathematical model for product matching is disclosed. When the bi-encoder is used, text data of product information related to two products are encoded to vector representations, respectively. When the cross-encoder is used, text data of two product information are encoded collectively. In general, the cross-encoder can capture a more complex correspondence between input two pieces of data, but for that reason, a cross-encoder-based model may require more computer resources and more computing time than a bi-encoder-based model. In the e-commerce platform, since it is common that several million or more products are included in a product catalog, it may be difficult to use a technique that may require a lot of computer resources like the cross-encoder.

Further, products handled in the e-commerce platform have dramatically increased. Therefore, it is desired to make product matching more efficient.

It is an object of a given embodiment of this disclosure to provide a technique for improving product matching.

A method according to one aspect of the present disclosure is a method of learning a model used upon searching for a product corresponding to a predetermined search condition from among multiple products, including: a step of generating vector representations from product information describing about products to generate first vector representations based on product information of the multiple products and generating first data including one or more combinations of products highly similar to each other from among the multiple products based on similarity between the first vector representations with using a first model; a step of generating second vector representations from product information of two products included in each of the combinations of products included in the first data and generating second data including combinations of products highly similar to each other based on the second vector representations, with using a second model for generating vector representations from combinations of two product information; and a step of executing learning of a third model for generating vector representations from the product information using the second data as training data.

According to the given embodiment of the present disclosure, a technique for improving product matching can be provided.

### Brief Description of Drawings

Fig. 1 is a functional block diagram of a learning device 10 according to an embodiment of this disclosure.
Fig. 2 is a diagram illustrating an example of the physical configuration of the learning device 10 according to the present embodiment.
Fig. 3 is a diagram illustrating the outline of processing executed by the learning device 10 according to the present embodiment.
Fig. 4 is an example of a flowchart of learning processing executed by the present embodiment.
Fig. 5 is an example of a flowchart of processing executed by the present embodiment when a new product is put up for sale.
Fig. 6 is an example of a flowchart of search result output processing executed by the present embodiment.
Fig. 7A illustrates evaluation results when manual annotation data can be used.
Fig. 7B illustrates evaluation results when no manual annotation data is available.

### Detailed Description

An embodiment will be described below with reference to the accompanying drawings. To facilitate understanding of the description, the same components in respective drawings are given the same reference numerals as far as possible to omit redundant description.

A method of learning a model used upon searching for a product corresponding to a predetermined search condition from among multiple products, a learning device, and a learning program according to the present embodiment will be described below with reference to the accompanying drawings.

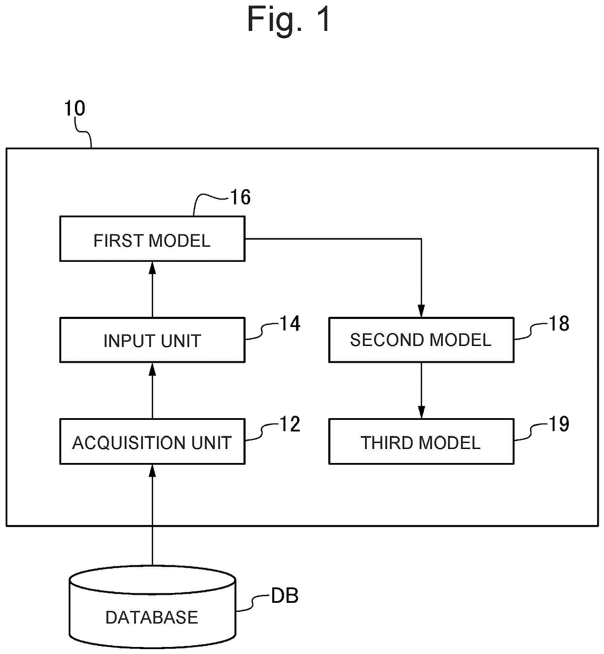

Fig. 1 is an example of a functional block diagram of a learning device 10 according to an embodiment of this disclosure. The learning device 10 includes an acquisition unit 12, an input unit 14, a first model 16, a second model 18, and a third model 19.

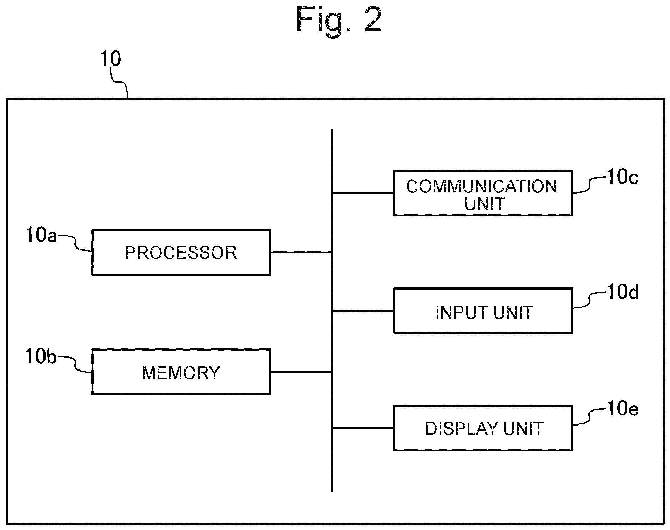

The acquisition unit 12 acquires information describing about products (hereinafter, which may also be referred to as "product information") handled in a predetermined e-commerce platform, for example, from a database DB outside of the learning device 10. In the embodiment of the present disclosure, the product information may include any information related to each individual product, which includes, for example, the title of the product such as the name of the product, the description, price, and state of the product, the product image, and the like. The database DB is a database for storing product information on any products. For example, the database DB may store product information on all products handled in the e-commerce platform, or may store product information on some products. Note that the description will be made here by taking, as an example, the case where the product information is acquired from the external database DB, but the product information may also be stored, for example, in a memory of the learning device 10 (a memory 10b to be described later (see Fig. 2)), and acquired from the memory.

The input unit 14 inputs, to the first model 16, the product information acquired by the acquisition unit 12.

The first model 16 is a mathematical model for generating vector representations (hereinafter, which may also be referred to as "first vector representations") related to products based on the input product information. The first model 16 may be a bi-encoder model, which may be configured by a machine learning model including a natural language processing-based encoder such as a bidirectional encoder representation model (BERT (Bidirectional Encoder Representations from Transformers)) capable of generating vector representations. For example, the first model 16 generates a vector representation of each of multiple products for which product information is acquired to generate data (hereinafter, which may also be referred to as "first data") including combinations of highly similar products from among the multiple products based on similarity between generated vector representations.

The second model 18 is a mathematical model for generating vector representations from combinations of two product information, which may be a cross-encoder model capable of computing an index related to the similarity between two products, for example, from the generated vector representations. In the present embodiment, the second model 18 generates vector representations (hereinafter, which may also be referred to as "second vector representations") related to each combination based on the data on the combinations of highly similar products generated by the first model 16. Based on the vector representations generated from combinations of product information, the second model 18 generates data (hereinafter, which also be referred to as "second data") including combinations of highly similar products.

The third model 19 executes learning using, as training data, the data including the combinations of highly similar products generated by the second model 18. For example, the third model 19 may be configured to include the same encoder as that of the first model 16.

As described above, in the learning processes of learning models used to search for a product executed by the learning device 10 of the present embodiment, the first model 16 and the second model 18 are used to generate vector representations related to the combinations of highly similar products by the second model 18 based on the combinations of highly similar products generated by the first model 16. Thus, learning of the third model 19, used for matching between a product newly put up for sale in e-commerce and a product already stored in a product catalog, and product matching in the product catalog with respect to a new search condition entered by a user, is executed. Therefore, the amount of data as training data used to learn the third model 19 can be reduced, and more accurate data related to the similarity as the training data can be used. Therefore, the efficiency of the learning processes can be improved. Further, a learning model from which highly accurate output is possible can be implemented. Therefore, product matching can also be executed efficiently.

Fig. 2 is a diagram illustrating an example of the physical configuration of the learning device 10 according to the present embodiment. The learning device 10 has a processor 10a such as a CPU (Central Processing Unit) corresponding to a computing unit, the memory 10b, a communication unit 10c, an input unit 10d, and a display unit 10e. These units are connected to one another through a bus to be able to send and receive data. Note that the description will be made in a case where the learning device 10 is one computer in this example, but the learning device 10 may also be implemented in a combination of two or more computers. Further, the configuration illustrated in Fig. 2 is just an example, and the learning device 10 may also have any other configuration or may not have some of these components in the configuration.

The processor 10a is a control unit to perform control related to the execution of a program stored in the memory 10b, and the computation and processing of data. The processor 10a is a computing unit to execute a program (learning program) for executing learning using respective data and the like. The processor 10a receives various data from the input unit 10d and the communication unit 10c to display the computation results of data on the display unit 10e and store the computation results of data in the memory 10b.

For example, the memory 10b may have a RAM (Random Access Memory) and a ROM (Read Only Memory) corresponding to storage units. In the storage units, the RAM is data writable, which may be composed of semiconductor memory elements, for example. The RAM may store a program executed by the processor 10a and data (for example, product information) used for learning. Note that these data are just an example, and any other data may also be stored in the RAM, or some of the data may not be stored.

In the storage units, the ROM is data readable, which may be composed of semiconductor memory elements, for example. For example, the ROM may store a learning execution program and data not rewritten.

The communication unit 10c is an interface to connect the learning device 10 to any other devices. The communication unit 10c may be connected to a communication network such as the Internet.

The input unit 10d receives input of data from the user, which may include a keyboard and/or a touch panel, for example.

The display unit 10e visually displays the computation results by the processor 10a, which may be configured by an LCD (Liquid Crystal Display), for example. For example, the display unit 10e may also display learned data output in the learning processes according to the present embodiment, the searching results of a product, and the like.

The learning execution program may also be stored on a computer-readable storage medium such as the memory 10b (for example, the RAM or the ROM) and provided, or provided through a communication network connected by the communication unit 10c. In the learning device 10, the processor 10a executes the learning program to carry out various operations described with reference to Fig. 1. Note that these physical components are just an example, and may not be independent components, respectively. For example, the learning device 10 may also include an LSI (Large-Scale Integration) in which the processor 10a and the memory 10b are integrated. Further, the learning device 10 may include a GPU (Graphical Processing Unit) as the processor 10a, and the various operations described with reference to Fig. 1 may be implemented by the GPU executing the learning program.

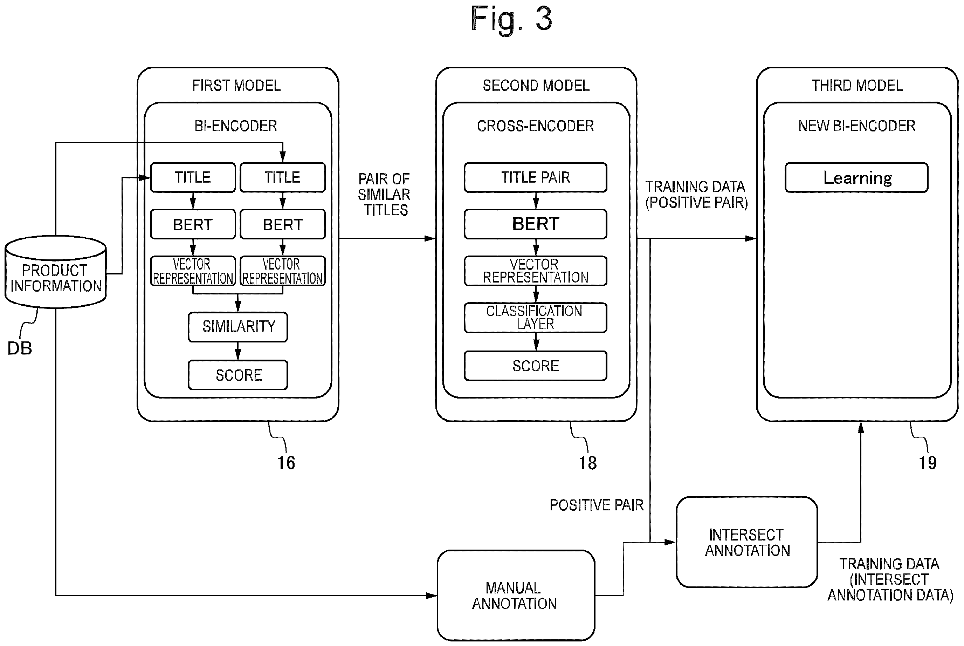

Fig. 3 illustrates the outline of processing executed by the learning device 10 according to the present embodiment.

As illustrated in Fig. 3, in the learning processes according to the embodiment of the present disclosure, product information related to some or all of products is first acquired from the database DB in which multiple pieces of product information are stored. As the product information, for example, each product title is acquired. For example, the product title may be a title attached by a seller when the seller puts up the product for sale in the e-commerce platform and it may be presented it when the user searches for the product in the e-commerce platform. For example, the title of the product may be only the product name, or may also include, in addition to the product name, information on a brief description related to the features of the product such as the bland name, the manufacturer, the importer, and the color and shape, and the size of the product. As the product information, for example, the product description, a product image(s), the product category, and the like may also be included in addition to the title. Further, as the multiple products, some of products may be put up for sale from plural different vendors.

The product information such as the product title is acquired in the first model 16 including a bi-encoder as the encoder (hereinafter, which may also be referred to as a "first encoder") for generating vector representations based on the product information, and the vector representations are generated. For example, among the acquired product information, vector representations for the titles of two products are generated by the bi-encoder, respectively. The generated two vector representations are used, for example, to compute the similarity between the vector representations of the product information of the two products by the bi-encoder. Thus, the similarity between the two products is computed based on the similarity between the vector representations. The above processing in the first model 16 is repeated for some or all of the products included in the database. For example, when computing similarities among all of the products, the similarities among all products may be computed.

Thus, processing is made possible such as to extract a predetermined number of products (for example, 50 products), for example, as a product group similar to a product in descending order of similarity score to this product. Note that the product information of multiple products, the vector representations of product information, similarity, and combinations of products determined to be similar based on the similarity may also be stored as a corpus for each identical or similar product group.

Further, the vector representations of products computed by the first model 16 may be dimensionally lowered, for example, by indexing using an algorithm used for neighborhood search processing such as FAISS (Facebook AI Similarity Search). In this case, FAISS functions as a dimensionality reduction encoder in the embodiment of the present disclosure. Thus, since the computational load upon determining the similarities can be reduced by reducing the dimension of the vector representations, for example, when a new search condition is input from the user, the input search condition can be indexed by the same method to compute similarities to the indexes of vector representations of the indexed product group based on the indexed search condition. By computing the similarities to the indexes of the vector representations of the indexed product group, k products (where k is a natural number) can be acquired in descending order of similarity, and hence the computing time in the case of presenting the products to the user can be reduced. Note that the determination of the similarity between the vector representations may also be evaluated, for example, based on the distance between the vector representations. As described above, for example, by indexing using the algorithm such as FAISS, the similarity between vector representations can be evaluated more effectively based on known indexing such as Euclidean distance or cosine similarity.

Next, data related to a combination (pair) of products similar in terms of the titles generated by the first model 16 is processed by the second model 18. In the second model 18, for example, a cross-encoder is used as an encoder (hereinafter, which may also be referred to as a "second encoder") for generating vector representations from a combination of two product information. By the cross-encoder, data related to a combination of products similar in title is encoded by BERT or the like included in the cross-encoder to generate the vector representations of the combination.

In the cross-encoder according to the embodiment of the present disclosure, a classification layer (Classifier) is provided on the BERT, and the vector representations related to the generated combination are supplied to the classification layer to determine whether or not the two products represented by the vector representations are the same product. For example, by the classification layer, a quantitative score indicating whether or not the two products are the same product is output to determine whether or not the same product is indicated by the magnitude of the score.

Thus, as for the combinations of products determined to be highly similar by the first model 16, the second model 18 uses the cross-encoder which is high in the output accuracy of similarity determination to determine whether or not two products included in each combination of products indicate the same product. Therefore, the output from the second model 18 includes a combination of products more highly similar than the output from the first model 16.

Then, learning of the third model 19 is executed by using, as training data, the combination of products output by the second model 18. For example, the third model 19 may include an encoder such as the bi-encoder used in the first model 16. Note that when the third model 19 includes a bi-encoder as the encoder, the bi-encoder included in the third model may also be called a new bi-encoder. Further, the encoder used in the third model 19 may be lower in output accuracy related to similarity than the encoder used in the second model 18. The third model 19 may be used, for example, when a new product put up for sale in the e-commerce platform is added in association with any similar product in the e-commerce product catalog. As for a product newly put up for sale, for example, an annotation related to the similar product may be attached from an e-commerce platform provider. For example, the annotation related to the similar product may be manually attached.

As described above, upon learning the third model 19, related products are first extracted by the first model 16, and among combinations of products determined by the first model 16 to be related products, combinations of more highly similar products are output by using the second model 18. Further, for example, when the bi-encoder and the cross-encoder are used as encoders of the first model 16 and the second model 18, respectively, plural products similar to a new product are first determined. Then, in the second model 18, the cross-encoder is applied to combinations of products determined to be similar by the bi-encoder to output combinations higher in similarity accuracy. The combinations of products determined to be highly similar by the cross-encoder are annotated to be positive and used as training data in learning the third model 19.

As mentioned above, for example, there is a case where an annotation related to a similar product may be attached from the e-commerce platform provider by a method such as a manual method. In general, the manually attached annotation is highly accurate, and can be used as training data effectively. However, in the learning processes according to the embodiment of the present disclosure, it is possible to generate training data further higher in accuracy than that of the data to which the annotation is manually attached. In other words, in the learning processes according to the embodiment of the present disclosure, it may also be determined by the cross-encoder whether each combination of products determined to be highly similar by the manual annotation is highly similar or not. When the combination of products manually annotated to be highly similar (which may also be referred to as "human annotation) is also determined by the cross-encoder to be highly similar, since the combination of products is determined to be highly similar in both cases, the accuracy related to similarity is high. Therefore, since the combination of products is more highly similar than the combination of products only manually determined to be highly similar and the combination of products determined to be highly similar only by the cross-encoder, the combination of more highly similar products can be used as superior training data.

Further, the amount of data of the combination of products more positive than those by the manual annotation and by the cross-encoder (which may also be referred to as "intersect annotation") is smaller than the data positively annotated either manually or by the cross-encoder, respectively. Therefore, since a smaller amount of training data can be used, the computer resources and computing time required for learning can be reduced. On the other hand, as for a product without being manually annotated, a combination of products to which an annotation is attached by the cross-encoder can be used. As described above, data to which the annotation is attached by the cross-encoder can also be high in output accuracy related to similarity, and can be used effectively. When the data to which the annotation is attached by the cross-encoder is used, it is effective in that no manual annotation is required. Note that after the learning of the third model 19 is completed, for example, each combination of products may be dimensionally lowered and indexed, for example, by using the FAISS like in the case of the first model 16.

For example, when a new product is put up for sale by a seller, processing to be described below may also be performed along the processes described above.

First, the new product put up for sale is received. Next, vector representations (hereinafter, which may also be referred to as "third vector representations") based on product information of the new product is generated, for example, by the first model 16 using the bi-encoder as the encoder. Based on similarities between the generated vector representations and vector representations of products in the product catalog used in e-commerce service generated by using the bi-encoder of the first model 16 or the like, data (hereinafter, which may also be referred to as "third data") including a new combination of products highly similar to the product newly put up for sale is generated. As for the generated new combination, vector representations (hereinafter, which may also be referred to as "fourth vector representations") are generated from the combination of product information of two products included in the new combination by using the second model 18, that is, by using the cross-encoder or the like used as the encoder in the second model 18. Based on the generated vector representations, data including combinations of highly similar products (hereinafter, which may also be referred to as "fourth data") is generated. By annotating each combination of highly similar products included in the generated data to be positive, respectively, cross-encoder annotation data (hereinafter, which may also be referred to as "second encoder annotation data") is generated. The generated cross-encoder annotation data is used as training data to execute learning of the third model 19.

Thus, the third model 19 is further learned when the new product is put up for sale, and hence the third model 19 capable of handling more products can be built. Note that the new learning may be executed each time a new product is put up for sale, or may be executed each time a predetermined number of new products are put up for sale. Alternatively, the learning may be executed every predetermined period of time. Further, for example, when a new product is put up for sale, the annotation may be executed by the e-commerce service provider using a method such as a manual method. However, there is a case where product information attached by a seller at the time of putting up a product for sale may contain an error, and hence inspection by the e-commerce platform provider may be executed. The manual annotation may be executed by taking the inspection results into account. In this case, the accuracy of manual annotation data is further improved.

Further, for example, when the user such as a purchaser searches for a related product in the e-commerce service, the learning model built by the processes described above may be used to output a search result to be described below. First, input of a search condition from the user is received. Next, the vector representation of the search condition is generated by the third model 19 mentioned above, that is, by the bi-encoder or the like used as the encoder in the third model 19. Based on similarity between the vector representations of product information of multiple products and the vector representation of the search condition generated by the third model 19, product information of a product(s) corresponding to the search condition is generated. The generated product information of the product(s) corresponding to the search condition is presented to the user as the search result.

As described above, the accuracy of training data used in learning the mathematical models used in the e-commerce platform can be improved by the learning processes according to the embodiment of the present disclosure. Therefore, for example, even in an e-commerce service handling several million or more products, learning can be executed effectively. Further, as exemplified above, the computer resources and computing time required in the learning processes can be suppressed by using, as training data, data generated by determining similarities by the second model 18 including the cross-encoder using the vector representations of the combinations of products determined to be highly similar using the first model 16 including the bi-encoder. The product matching can also be executed efficiently.

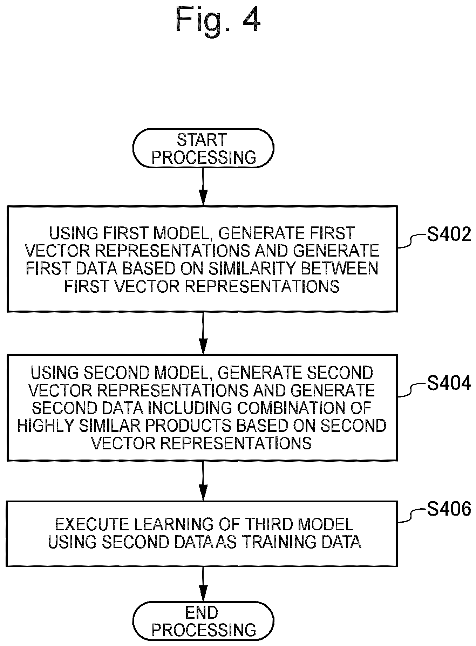

Referring next to Fig. 4, learning processing executed by the learning device 10 according to the present embodiment will be described. Fig. 4 is an example of a flowchart of learning processing executed by the present embodiment.

First, the first vector representations are generated using the first model 16, and first data is generated based on the similarity between the first vector representations (S402). In the embodiment of the present disclosure, the first model 16 generates vector representations from product information describing about products. Further, the first data includes one or more combinations of highly similar products among multiple products.

Next, the second vector representations are generated using the second model 18 to generate second data including combinations of highly similar products based on the second vector representations (S404). In the embodiment of the present disclosure, the second model 18 generates vector representations from each combination of two product information. Further, the second vector representations are generated from a combination of product information of two products included in each of the combinations of products included in the first data.

Then, learning of the third model 19 is executed using the second data as training data (S406). In the embodiment of the present disclosure, the third model 19 generates vector representations from the product information.

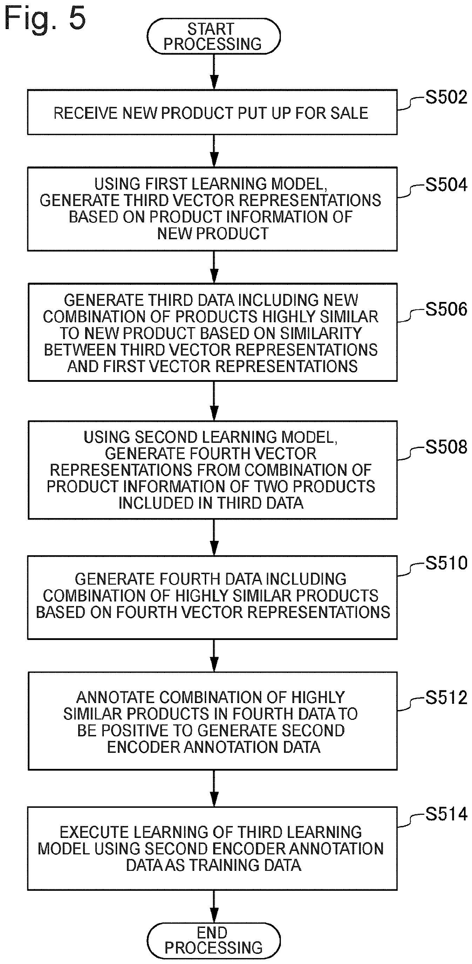

Referring next to Fig. 5, illustrated processing at the time of putting up a new product for sale according to the present embodiment will be described. Fig. 5 is an example of a flowchart of the processing at the time of putting up a new product for sale and executed by the present embodiment.

First, a new product put up for sale is received (S502).

Next, third vector representations based on product information of the new product are generated using the first model 16 (for example, a mathematical model including the bi-encoder as an encoder) (S504).

Then, third data including a new combination of products highly similar to the new product is generated based on the similarity between the third vector representations and the first vector representations (S506).

Next, fourth vector representations are generated from a combination of product information of two products included in the new combination included in the third data by using the second model 18 (for example, a mathematical model including the cross-encoder as an encoder) (S508).

Then, fourth data including combinations of highly similar products is generated based on the fourth vector representations (S510).

Next, each of the combinations of highly similar products included in the fourth data is annotated to be positive to generate second encoder annotation data (S512). For example, when the cross-encoder is used as the encoder of the second model 18, the second encoder annotation data may be cross-encoder annotation data.

Then, learning of the third model 19 is executed using the second encoder annotation data as training data (S514).

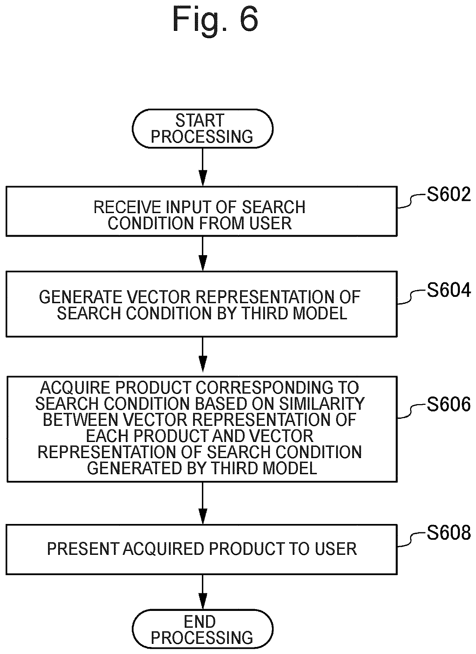

Referring next to Fig. 6, search result output processing of illustrative related products according to the present embodiment will be described. Fig. 6 is an example of a flowchart of the search result output processing executed by the present embodiment.

First, input of a search condition from the user is received (S602).

Next, a vector representation of the search condition is generated by the third model 19 described above (S604).

Then, product information of a product corresponding to the search condition is acquired based on the similarity between the vector representation of product information of each of multiple products and the vector representation of the search condition generated by the third model 19 (S606).

Next, the acquired product information of the product is presented to the user (S608).

As described in detail above, a mathematical model learning method used for product matching in e-commerce according to the embodiment of the present disclosure is a method of learning a model used when a product corresponding to a predetermined search condition is searched for from among multiple products. In the embodiment of the present disclosure, the first vector representations based on product information of multiple products are generated using the first model 16 for generating vector representations from product information describing about products to generate the first data including one or more combinations of highly similar products from among the multiple products based on the similarity between the first vector representations. Further, using the second model 18 for generating vector representations from combinations of two product information, the second vector representations are generated from a combination of product information of two products included in each of the combinations of products included in the first data to generate the second data including combinations of highly similar products based on the second vector representations. Further, using the second data as training data, learning of the third model 19 for generating vector representations from product information is executed.

Therefore, in the learning processes of mathematical models according to the embodiment of the present disclosure, the generation of data including the combinations of highly similar products is executed by the first model 16 from the vector representations of product information generated based on the product information to generate vector representations by the second model 18 based on the combinations of products in order to generate highly similar combinations. By using the first model 16 and the second model 18 in combination, the accuracy of similarity can be more improved, for example, than that in the case of using only the first model 16. Therefore, data including combinations of more highly similar products than that in the case of using only the first model 16 can be generated. Further, using the data including the combinations generated by the first model 16, vector representations related to the combinations are generated by the second model 18. Thus, for example, since the amount of data processed in the second model 18 can be reduced more than that in a case where data related to the combinations of highly similar products are generated based on the product information using only the second model 18, the computer resources and computing time can be reduced. Further, by executing learning using, as training data, the data thus generated related to the combinations of products with high accuracy in terms of similarity, a learning model (third model 19) which can be high in the accuracy of product matching can be built.

Further, for example, when a new product is put up for sale, a product highly similar to the product put up for sale can be associated with the product put up for sale from among multiple products included in a product catalog by using the third model 19 learned in the embodiment of the present disclosure. Further, for example, when the user enters a search query for a certain product, a product associated with a search condition included in the search query can be presented to the user by using the third model 19 learned in the embodiment of the present disclosure. In the embodiment of the present disclosure, since the accuracy of product matching of the third model 19 can be improved, a product highly similar, for example, to a product put up for sale can be associated accurately. Further, by using the third model 19 learned in the embodiment of the present disclosure, the accuracy of the search result presented to the user can be improved when the user does a search in e-commerce.

Further, in the learning processes according to the embodiment of the present disclosure, for example, an encoder higher in output accuracy related to similarity between products than the encoder for generating vector representations in the first model 16 may also be used as an encoder to generate vector representations in the second model 18. Specifically, for example, the bi-encoder may be used in the first model 16, the cross-encoder may be used in the second model 18, and the bi-encoder may be used in the third model 19.

As described above, deep learning models including encoders such as the bi-encoder and the cross-encoder are used to compute the similarity between products in the e-commerce product catalog in order to associate a similar product with a product put up for sale, or used to present a product similar to a search condition entered by the user. The cross-encoder is higher in output accuracy related to the similarity between products than the bi-encoder, but more computer resources and computing time may be required than the bi-encoder.

In the learning processes according to the embodiment of the present disclosure, plural mathematical models based on different encoders are used in combination. Specifically, for example, a mathematical model including the bi-encoder is used as the first model 16, and a mathematical model including the cross-encoder is used as the second model 18. First, similarities among many products are computed by the bi-encoder in a relatively short time, and combinations of highly similar products are computed by the cross-encoder based on the computed similarities among products to obtain an output result which is high in similarity accuracy. Thus, the accuracy of data to be output can be improved while suppressing the required computer resources and computing time.

Thus, a highly accurate model can be built efficiently by executing learning using, as training data, the data thus obtained to build a model to output similarity. Particularly, a more accurate learning model using less training data can be built by the learning processes according to the embodiment of the present disclosure. Further, the manual annotations of products based on the product information are costly and time-consuming, but in the learning processes according to the embodiment of the present disclosure, the training data can be generated even when there are no manual annotations of some or all of products. Further, when there are manual annotations of some products, the accuracy of training data can be improved. Therefore, since the learning model can be built without going through the manual annotations in such an environment that new products are frequently put up for sale particularly like in e-commerce, the learning model is effective.

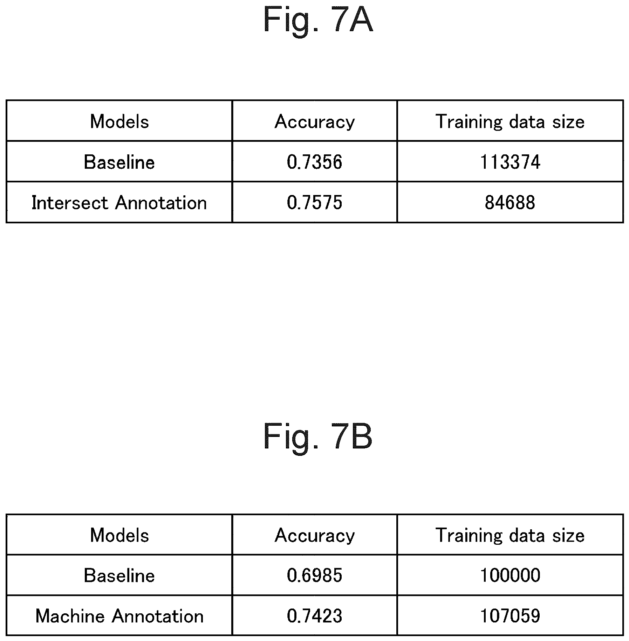

Referring to Fig. 7A and Fig. 7B, the results of verifying the learning processes executed by using the learning model according to the embodiment of the present disclosure will be described. In this experiment, data stored in an in-house e-commerce platform of the company of the present applicant were used. Each product entry included in the data may include the product ID, title, description, and the like described in Japanese and provided by each seller. Further, the same product ID may be given to the same product. In the present experiment, over 100 million product data in total were used. Since the details and amount of the product description vary from seller to seller, only the product title was used for learning.

BERT-based HuggingFace for Japanese language provided by Hugging Face, Inc. was used as a model using the bi-encoder and the cross-encoder. Search queries corresponding to any 100,000 products were searched by using a bi-encoder-based model (corresponding to the first model 16) to acquire top 50 product information obtained from the search results. For the search results (i.e., product matching information of 5 million products (100,000 × 50 = 5 millions)), combinations annotated to be positive by the cross-encoder were verified and compared in terms of accuracy among combinations of products annotated to be positive in the manual annotations, combinations of products annotated to be positive when the cross-encoder was applied, and combinations manually annotated to be positive.

Fig. 7A illustrates evaluation results when manual annotation data can be used. In Fig. 7A, the evaluation results of the accuracy of matching by the manual annotation data (Baseline), and the accuracy of matching of annotations to which positive are attached (Intersect Annotation) in both the manual annotations and the annotations by the cross-encoder are illustrated in comparison with each other. The accuracy was evaluated as a ratio of the first place product identical to a product indicated by the search query among the top 50 products of the search results according to the search query. As illustrated in Fig. 7A, when there is manual annotation data, the accuracy of manual annotation data was about 0.736. On the other hand, the accuracy of data annotated to be positive by the cross-encoder in addition to the manual annotation data was about 0.758. Thus, by taking into account the annotation data by the cross-encoder, the accuracy could be improved by about 2%.

Fig. 7B illustrates evaluation results when there is no manual annotation data. In Fig. 7B, the evaluation results of the accuracy of the search results (Baseline) by the bi-encoder (corresponding to the first model 16) and the accuracy of the search results (Machine Annotation) by the cross-encoder are illustrated. Like in the example described above with reference to Fig. 7A, the accuracy of the first place product was evaluated in each model even in Fig. 7B. The accuracy of combinations of the first place product of the search results by the bi-encoder is about 0.699, but the accuracy could be improved by about 4% to about 0.742 by further applying the cross-encoder.

Note that the data size of training data in each model is also illustrated together in Fig. 7A. Among pieces of matching information of 5 million products mentioned above, the data size of training data is such that data manually annotated to be positive were 113374 pieces, and data annotated to be positive further by the cross-encoder were 84688 pieces. In other words, the size of training data became smaller but the accuracy could be improved. In general, in machine learning, the model accuracy is improved by increasing the size of training data, but the computer resources and computing time required for learning increases as the size of training data increases. In the present experiment, the accuracy of output results could be improved by using, as training data, data which is small in size but high in the accuracy of product similarity.

In Fig. 7B, the size of training data in each model is also illustrated in the same manner. The size of training data of the bi-encoder model is the size of data of combinations with the first place product among the top 50 search results obtained for each of 100,000 search queries, which were 100,000 pieces. Further, the data size of training data of the model based on the cross-encoder is the size of data of combinations annotated to be positive further by the cross-encoder among the 5 million combinations, which were 107059 pieces. In other words, 84688 pieces of data annotated to be positive manually and by the cross-encoder described above with reference to Fig. 7A corresponds to data annotated to be positive even manually among 107059 pieces of data illustrated in Fig. 7B.

As described with reference to Fig. 7A and Fig. 7B, it was confirmed in the present experiment that the accuracy related to product matching could be improved by further applying the cross-encoder (second model 18) to the combinations of products determined to be higher similar by the bi-encoder (first model 16). Further, it was confirmed that when manual annotations could be used, combinations of highly similar products annotated to be positive manually and by the cross-encoder could be acquired, and hence accuracy could be improved. As described above, the accuracy of the learning model (third model 19) can be improved by using the acquired data as training data. Further, since the size of data can be reduced more than both the data manually annotated to be positive and the data annotated to be positive by the cross-encoder, the computer resources and computing time required for learning can be reduced.

While the description has been made by taking, as an example, the case where the learning processes according to the present embodiment described above are executed by the learning device 10, the configuration of the present embodiment is not limited to this example. For example, some processing in the learning processes can also be executed by any other computing device. For example, some processing may also be executed by using a server such as a cloud server.

Further, in a modification, learning processes may further be executed by using the third model learned by the learning processes according to the present embodiment. Specifically, for example, the configuration may be such that the third model according to the present embodiment is set to a new first model to generate vector representations (new first vector representations) from product information of multiple products using the new first model, generate data (new first data) including one or more combinations of highly similar products from among the multiple products based on the similarity between the new first vector representations, generate vector representations (new second vector representations) from combinations of product information of two products included in each of the combinations of products included in the new first data by using, for example, the second model according to the present embodiment, and generate data (new second data) including combinations of highly similar products based on the new second vector representations in order to execute learning of a new third model using the new second data as training data.

Since the third model already executed by the learning processes according to the present embodiment is used as the new first model, the new third model thus generated can further improve the similarity output accuracy. In particular, when bi-encoders are used as the first encoder and the third encoder (the encoder included in the third model), this modification is effective because the third model can be applied as the new first model relatively easily. Note that when the third model according to the present embodiment is used as the new first model, and learning models including bi-encoders as the new first model and the new third model described above are used, a learning model including a cross-encoder may also be used as a new second model.

Further, in another modification, learning according to the present embodiment may also be executed in each of the domains corresponding to different product categories. For example, learning of the first model, the second model, and the third model according to the present embodiment may also be executed on multiple products belonging to a domain corresponding to a clothing product category. Alternatively, for example, learning of the first model, the second model, and the third model according to the present embodiment may be executed on multiple products belonging to a domain corresponding to a food product category. Further, even when learning is executed in each product category domain, further learning may be performed using the learned third model as a new first model in the same manner as mentioned above to generate new second model and third model.

Alternatively, a learning model learned in a domain corresponding to a certain product category may also be used for learning in a domain corresponding to any other product category. For example, using the second model learned by using product information of multiple products belonging to a domain corresponding to a certain product category, second data may also be generated based on first data output by the first model learned about products belonging to a domain corresponding to any other product category. Further, learning may be performed based on the second data thus obtained by using the third model learned by the product information of products belonging to the domain corresponding to the other product category mentioned above. For example, the learning processes according to the present embodiment may also be executed using a first model and a third model learned by product information of products belonging to the domain corresponding to the clothing category as the first model and the third model, and using a second model learned by product information of products belonging to the domain corresponding to the food product category as the second model, respectively.

Further, learning of the new second model and third model may be executed by newly performing learning by using the third model learned in a domain corresponding to a certain product category as the above-described new first model in the same way as above. For example, the learning processes may also be executed by using, as the new first model, the third model learned using product information of products belonging to the domain corresponding to the clothing category, and by using, as the new second model and third model, respectively, the second model learned using product information of products belonging to the domain corresponding to the food category and the third model learned using product information of products belonging to the domain corresponding to the clothing category.

The learning models learned using product information of products belonging to domains corresponding to categories different from each other as described above can be used regardless of the categories, and this is effective, for example, in that the learning processes can be executed more efficiently than the case where the learning processes are executed for each category, respectively. Note that the above modifications are just illustrative examples, and the learning processes can be executed flexibly in the same way as mentioned above even when products belonging to domains corresponding to any categories other than clothes and foods are learned.

The present embodiment has been described above with reference to the specific examples. However, the present disclosure is not limited to these specific examples. Any other configuration to which a design change is added appropriately to these specific examples by a person skilled in the art is included within the range of the present disclosure as long as it has the features of the present disclosure. Each component, the arrangement, condition, and shape of the component, and the like included in each of the specific examples described above are not limited to those exemplified, and can be changed appropriately. The combinations of respective components included in each of the specific examples described above can be changed appropriately as long as there is no technical contradiction.

## Claims

1. A method of learning a model used upon searching for a product corresponding to a predetermined search condition from among a plurality of products, comprising:
a step of generating first vector representations based on product information of the plurality of products and generating first data including one or more combinations of products highly similar to each other from among the plurality of products based on similarity between the first vector representations, with using a first model for generating vector representations from product information describing about products;
a step of generating second vector representations from product information of two products included in each of the combinations of products included in the first data and generating second data including combinations of products highly similar to each other based on the second vector representations, with using a second model for generating vector representations from combinations of two product information; and
a step of executing learning of a third model for generating vector representations from the product information using the second data as training data.

2. The method according to claim 1, wherein
the first model includes a first encoder and the second model includes a second encoder, and
the second encoder has an output accuracy related to similarity between products higher than the first encoder.

3. The method according to claim 1 or 2, wherein similarity between the first vector representations is computed based on distance between two of the first vector representations.

4. The method according to any one of claims 1 to 3, wherein in the step of generating the second data, similarity is computed based on a score computed based on the second vector representations.

5. The method according to any one of claims 1 to 4, wherein the first model and the third model include bi-encoders, and the second model includes a cross-encoder.

6. The method according to any one of claims 1 to 5, wherein the product information is a title of each of the products.

7. The method according to any one of claims 1 to 6, further comprising a step of using a dimensionality reduction encoder to compute vector representations lower in dimension than the vector representations.

8. The method according to any one of claims 1 to 7, wherein in the step of generating the second data, when there is data related to a combination of products manually determined to be highly similar to each other, the similarity is determined to be high based on the second vector representations, and second data including the combination of products manually determined to be highly similar to each other is generated.

9. The method according to any one of claims 1 to 8, further comprising:
a step of receiving a new product put up for sale;
a step of generating third vector representations based on product information of the new product in order to generate third data including new combinations of products highly similar to the new product based on similarity between the third vector representations and the first vector representations with using the first model;
a step of generating fourth vector representations from combinations of product information of two products included in the new combinations included in the third data and generating fourth data including combinations of highly similar products based on the fourth vector representations with using the second model;
a step of generating second encoder annotation data by annotating each of the combinations of highly similar products included in the fourth data to be positive; and
a step of executing learning of the third model using the second encoder annotation data as training data.

10. A method of outputting search results of related products, comprising:
a step of receiving input of a search condition from a user;
a step of generating vector representations of the search condition by the third model according to any one of claims 1 to 9;
a step of acquiring product information of products corresponding to the search condition based on similarity between vector representations of product information of the plurality of products generated by the third model and vector representations of the search condition; and
a step of presenting the acquired product information of products to the user.
